# EUROPEAN PATENT APPLICATION

(11) **EP 3 981 559 A1**
(43) Date of publication of application: **13.04.2022**
(21) Application number: 19931593.8
(22) Date of filing: 06.06.2019
(51) Int. Cl.: B25J 19/02, B25J 15/08

(54) **TACTILE SENSOR, ROBOT HAND, AND ROBOT**

(71) Applicant: OMRON Corporation, Shiokoji-dori, Shimogyo-Ku Kyoto-shi Kyoto 600-8530 (JP)
(72) Inventor: NABETO, Misato, Kyoto-shi, Kyoto 600-8530 (JP); DOI, Sayaka, Kyoto-shi, Kyoto 600-8530 (JP); KOGA, Hiroki, Kyoto-shi, Kyoto 600-8530 (JP)
(74) Representative: SONN Patentanwälte OG
(86) International application number: PCT/JP2019/022640
(87) International publication number: WO 2020/246009

(57) **Abstract**

A tactile sensor pertaining to the present disclosure includes: a cover that is disposed so as to sandwich a base portion and covers at least part of the base portion; and a detection unit that is disposed between the base portion and the cover in a state in which it is pressed in the direction of the base portion by the cover, and detects force applied to the cover.

## Description

### Technical Field

The present disclosure relates to a tactile sensor, a robot hand, and a robot.

### Background Art

In Japanese Patent Application Laid-open No. 2016-205942 (patent document 1), for example, a multiaxial force sensor attached to the fingertip of a robot hand is described.

The multiaxial force sensor includes a sensor unit that has plural pressure sensors and a cover that covers the sensor unit. External forces input to the cover are transmitted to the pressure sensors of the sensor unit.

The multiaxial force sensor is designed in such a way that the cover contacts the pressure sensors as a result of enhancing the dimensional accuracy of the sensor unit and the cover.

### SUMMARY OF INVENTION

### Technical Problem

However, in the conventional multiaxial force sensor, the state of contact between the pressure sensors and the cover is dependent on the dimensional accuracy of the cover and the sensor unit.

For this reason, processing costs end up being incurred in order to enhance the dimensional accuracy of the cover and the sensor unit.

It is an object of the present disclosure to provide a tactile sensor, a robot hand, and a robot that can reduce costs compared to a case where the state of contact between a cover and a detection unit is ensured by enhancing dimensional accuracy.

### Solution to Problem

A tactile sensor of the present disclosure includes: a cover that is disposed so as to sandwich a base portion and covers at least part of the base portion; and a detection unit that is disposed between the base portion and the cover in a state in which it is pressed in the direction of the base portion by the cover, and detects force applied to the cover.

### Advantageous Effects of Invention

According to the present disclosure, costs can be reduced compared to a case where the state of contact between a cover and a detection unit is ensured by enhancing dimensional accuracy.

### BRIEF DESCRIPTION OF DRAWINGS

FIG. 1 is a schematic diagram showing a robot equipped with a robot hand pertaining to a first embodiment.
FIG. 2 is a side view showing main parts of the robot hand pertaining to the first embodiment.
FIG. 3 is a perspective view showing a first finger of the robot hand pertaining to the first embodiment and shows a state in which a contact portion has been detached.
FIG. 4 is a sectional view showing main parts of the first finger pertaining to the first embodiment.
FIG. 5 is a sectional view of main parts of the first finger pertaining to the first embodiment when viewed from the front.
FIG. 6 is a sectional view of main parts of the first finger pertaining to the first embodiment when viewed from above.
FIG. 7 is a sectional view of the first finger pertaining to the first embodiment when viewed from the front at a different position from that of FIG. 5.
FIG. 8 is a sectional view of main parts of the first finger pertaining to a second embodiment when viewed from the front.
FIG. 9 is a sectional view of main parts of the first finger pertaining to a third embodiment when viewed from above.
FIG. 10 is a sectional view showing main parts of the first finger pertaining to a fourth embodiment.
FIG. 11 is a sectional view of main parts of the first finger pertaining to the fourth embodiment when viewed from the front.

### DESCRIPTION OF EMBODIMENTS

### <First Embodiment>

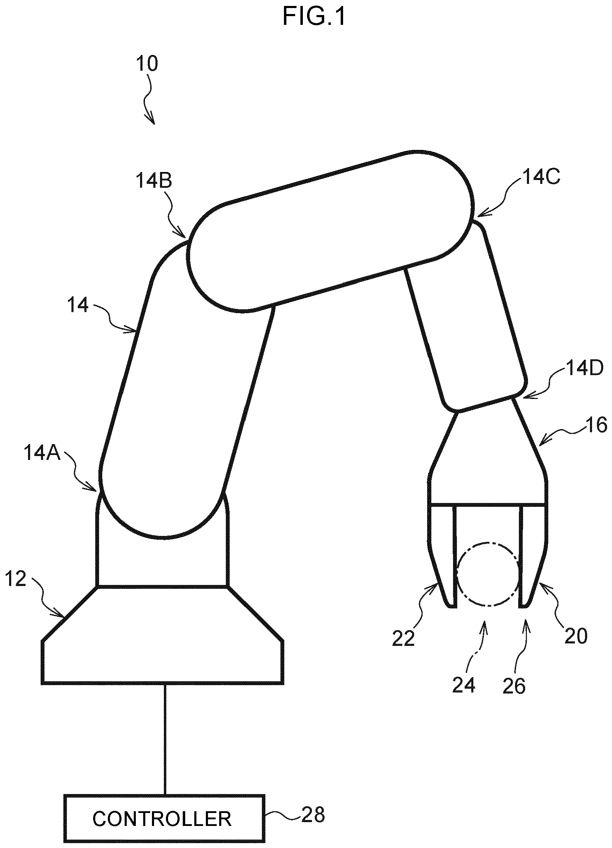

A first embodiment will be described below with reference to FIG. 1 to FIG. 7.

FIG. 1 is a diagram showing a robot 10 pertaining to this embodiment. The robot 10 includes a robot body 12, a robot arm 14 that extends from the robot body 12, and a robot hand 16 that is provided on a distal end of the robot arm 14.

The robot arm 14 is supported by the robot body 12 via a first joint 14A, and the robot arm 14 can rotate and bend with respect to the robot body 12. Furthermore, the robot arm 14 includes a second joint 14B and a third joint 14C and can bend in arbitrary directions at each of the joints 14B, 14C. The robot hand 16 is supported by the robot arm 14 via a fourth joint 14D, and the robot hand 16 can rotate and bend with respect to the robot arm 14.

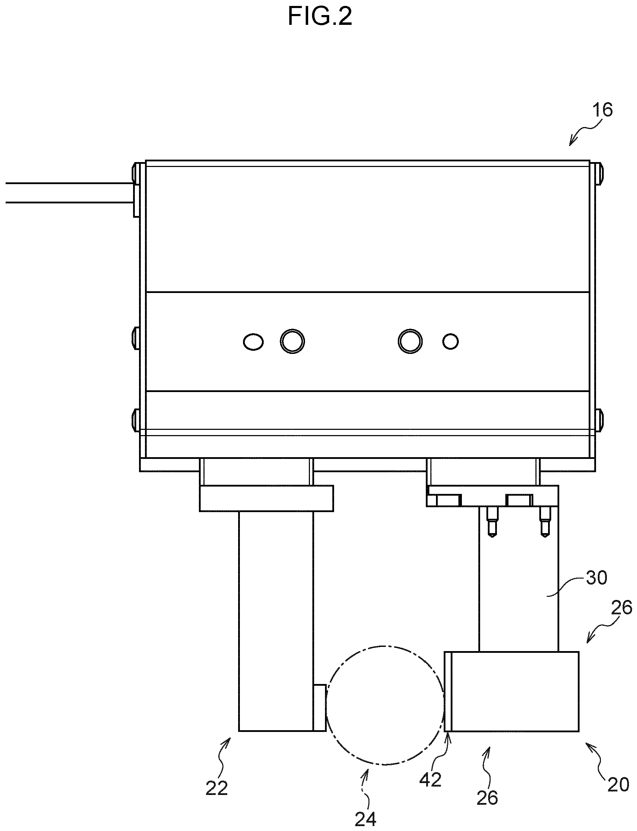

As shown in FIG. 1 and FIG. 2, the robot hand 16 includes a first finger 20 and a second finger 22, which are disposed opposing each other, and can hold an object 24 between the two fingers 20, 22. As shown in FIG. 1 to FIG. 3, the first finger 20 is equipped with a tactile sensor 26, and the second finger 22 configures an opposing member that opposes the first finger 20 equipped with the tactile sensor 26.

As shown in FIG. 1, a controller 28 is connected to the robot body 12. The robot body 12 outputs drive signals to actuators of the robot arm 14 and the robot hand 16 based on control signals from the controller 28 to drive the robot arm 14 and the robot hand 16.

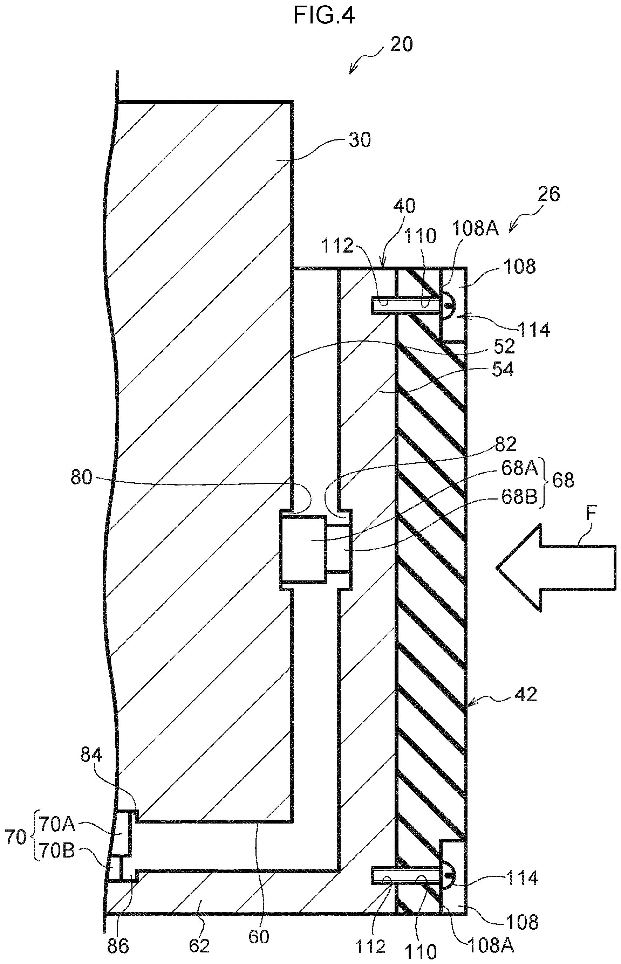

FIG. 4 is a sectional view of main parts showing the first finger 20, and a base portion 30 configuring the first finger 20 applies force such as gripping force to the object 24 when it grips the object 24 together with the second finger 22. The base portion 30 is equipped with the tactile sensor 26.

### [Tactile Sensor]

The tactile sensor 26 is disposed so as to sandwich the base portion 30. The tactile sensor 26 includes a cover 40, which covers at least part of the base portion 30, and a detection unit (detailed below), which is disposed between the base portion 30 and the cover 40 in a state in which it is pressed in the direction of the base portion 30 by the cover 40 and detects force applied to the cover 40. A contact portion 42 that contacts a target place of the object 24 is replaceably attached to the cover 40.

### [Cover]

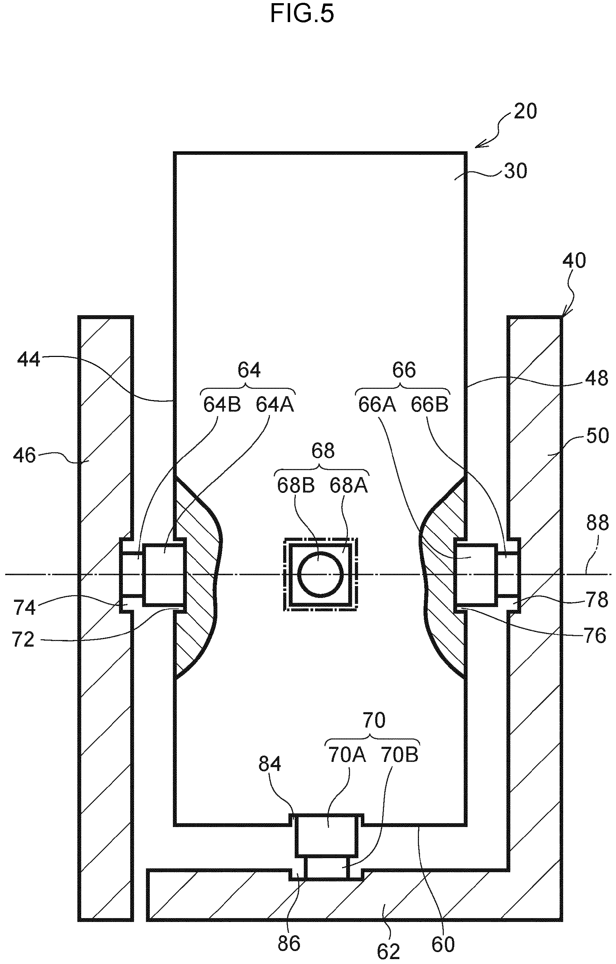

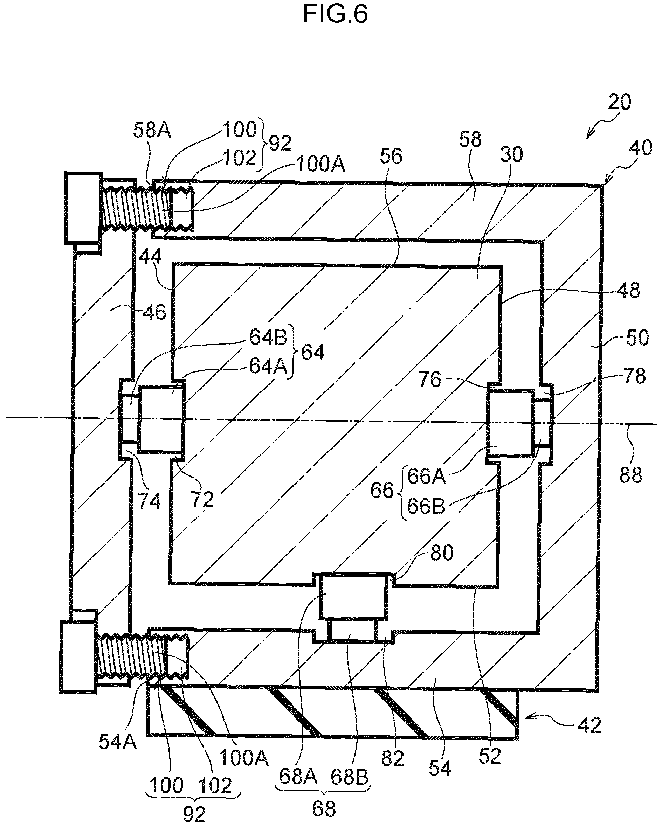

As shown in FIG. 5 and FIG. 6, the cover 40 includes a first side wall 46 disposed along one side face 44 of the base portion 30 which is prismatic in shape as an example, a second side wall 50 disposed along another side face 48 on the opposite side of the one side face 44, and a connecting portion that interconnects the first side wall 46 and the second side wall 50. As shown in FIG. 6, the connecting portion includes a front wall 54 disposed along a front face 52 of the base portion 30 and a rear wall 58 disposed along a back face 56, and the front wall 54 configures a connecting wall. The front wall 54 and the rear wall 58 are continuous with the second side wall 50, and the second side wall 50 is connected to side edges of the front wall 54 and the rear wall 58.

Furthermore, as shown in FIG. 5, the cover 40 includes a distal end wall 62 disposed along an end face 60 of the base portion 30, and the distal end wall 62 is supported by the first side wall 46 and the second side wall 50. Because of this, the cover 40 is formed in the shape of a box by the first side wall 46, the second side wall 50, the front wall 54, the rear wall 58, and the distal end wall 62.

### (Detection Unit)

As shown in FIG. 5 and FIG. 6, the detection unit includes a first detection unit 64 disposed between the one side face 44 and the first side wall 46 and a second detection unit 66 disposed between the other side face 48 and the second side wall 50. Furthermore, the detection unit includes a third detection unit 68 disposed between the front face 52 and the front wall 54 (see FIG. 6) and a fourth detection unit 70 disposed between the end face 60 and the distal end wall 62. The rated loads of each of the detection units 64, 66, 68, 70 is lower than the rated load of the tactile sensor 26.

The first detection unit 64 is disposed in the central portion of the first side wall 46 which is rectangular in shape, and the second detection unit 66 is disposed in the central portion of the second side wall 50 which is rectangular in shape. The third detection unit 68 is disposed in the central portion of the front wall 54 which is rectangular in shape, and the fourth detection unit 70 is disposed in the central portion of the distal end wall 62 which is rectangular in shape (see FIG. 6).

Each of the detection units 64, 66, 68, 70 detects an applied force as an electrical change and transmits the detected electrical change to the controller 28 via a harness not shown in the drawings. Examples of electrical changes include a change in capacitance, a change in resistance value, a change in current, a change in inductance, a charge transfer, and a change in resonance frequency. Each of the detection units 64, 66, 68, 70 is configured by a sensor, and the sensor can be called a load sensor or a force sensor.

The detection units 64, 66, 68, 70 have identical configurations, and include rectangular sensor bodies 64A, 66A, 68A, 70A and cylindrical contacts 64B, 66B, 68B, 70B that project from the sensor bodies 64A, 66A, 68A, 70A. It will be noted that the detection units 64, 66, 68, 70 may be different types of detection units and may be detection units with different measurement ranges.

As shown in FIG. 6, the sensor body 64A of the first detection unit 64 is fixed to the base portion 30 in a state in which it is housed in a recessed portion 72 for positioning formed in the one side face 44. The distal end of the first contact 64B of the first detection unit 64 is adhered to the cover 40 in a state in which it is inserted into a recessed portion 74 for positioning formed in the first side wall 46 of the cover 40.

The sensor body 66A of the second detection unit 66 is fixed to the base portion 30 in a state in which it is housed in a recessed portion 76 for positioning formed in the other side face 48. The distal end of the second contact 66B of the second detection unit 66 is adhered to the cover 40 in a state in which it is inserted into a recessed portion 78 for positioning formed in the second side wall 50 of the cover 40.

The sensor body 68A of the third detection unit 68 is fixed to the base portion 30 in a state in which it is housed in a recessed portion 80 for positioning formed in the front face 52. The distal end of the third contact 68B of the third detection unit 68 is adhered to the cover 40 in a state in which it is inserted into a recessed portion 82 for positioning formed in the front wall 54 of the cover 40.

The sensor body 70A of the fourth detection unit 70, as shown in FIG. 5, is fixed to the base portion 30 in a state in which it is housed in a recessed portion 84 for positioning formed in the end face 60. The distal end of the fourth contact 70B of the fourth detection unit 70 is adhered to the cover 40 in a state in which it is inserted into a recessed portion 86 for positioning formed in the distal end wall 62 of the cover 40.

Because of this, the cover 40 is supported by the base portion 30 via the detection units 64, 66, 68, 70, and the walls 46, 50, 54, 58, 62 configuring the cover 40 can be integrally displaced with respect to the base portion 30.

It will be noted that although in this embodiment the recessed portions 72, 74, 76, 78, 80, 82, 84, 86 for positioning the detection units 64, 66, 68, 70 are formed in the base portion 30 and the cover 40, they are not limited to this. For example, the recessed portions 72, 74, 76, 78, 80, 82, 84, 86 for positioning the detection units 64, 66, 68, 70 may also be formed in at least either one of the base portion 30 and the cover 40.

The contacts 64B, 66B, 68B, 70B of the detection units 64, 66, 68, 70 are configured to retract toward the sensor bodies 64A, 66A, 68A, 70A in accordance with the forces applied thereto as an example. The detection units 64, 66, 68, 70 measure the forces applied to the contacts 64B, 66B, 68B, 70B in accordance with the amount of retraction of the contacts 64B, 66B, 68B, 70B.

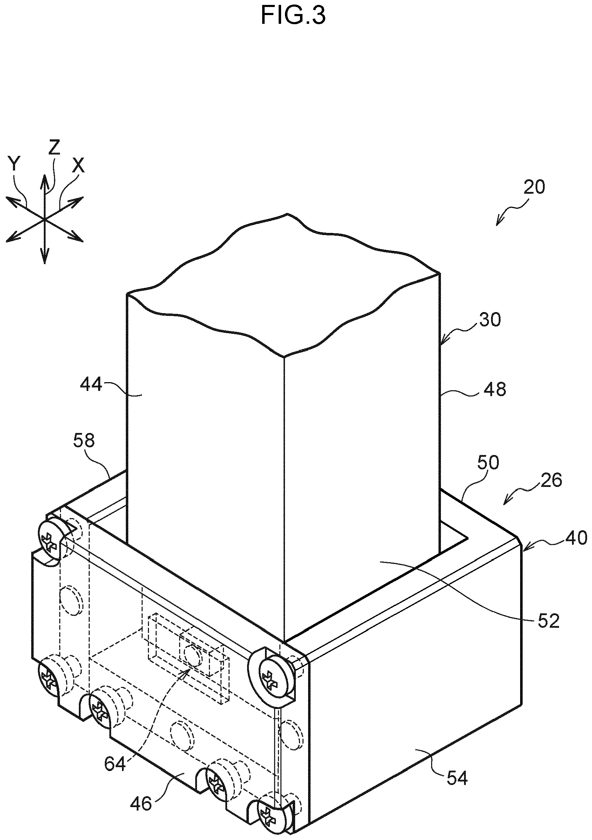

Because of this, as shown in FIG. 3, the detection units 64, 66, 68, 70 detect, from relative displacement of the cover 40 with respect to the base portion 30, forces acting in a lateral direction X of the base portion 30, forces acting in a front and rear direction Y of the base portion 30, and forces acting in a length direction Z of the base portion 30.

Additionally, as shown in FIG. 6, the first detection unit 64 and the second detection unit 66 are disposed in such a way that the projection direction of the first contact 64B projecting from the first detection unit 64 and the projection direction of the second contact 66B projecting from the second detection unit 66 are in opposite directions on a same hypothetical line 88.

### (Application Structure)

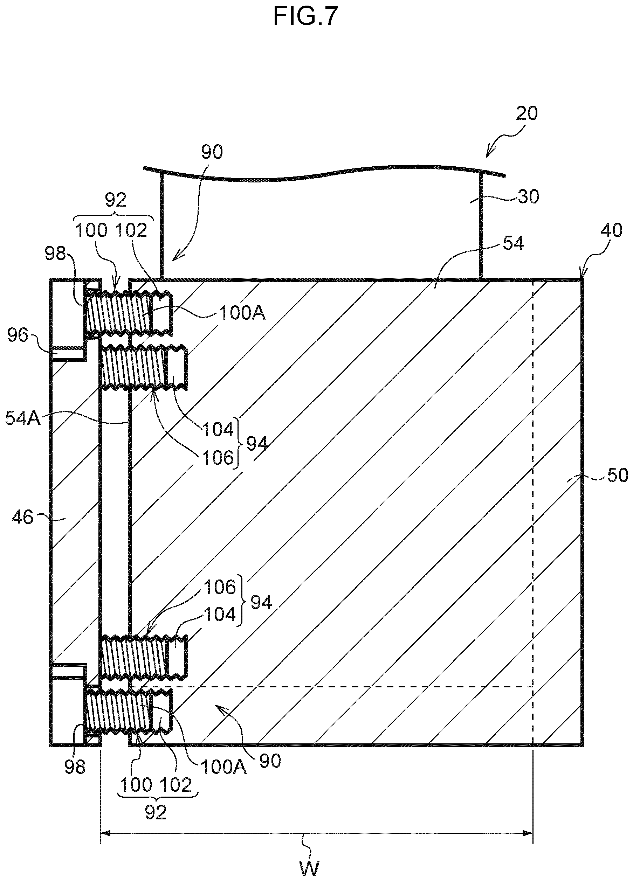

As shown in FIG. 7, the cover 40 includes a pressure applying structure 90 that applies pressure to the first detection unit 64 and the second detection unit 66.

The pressure applying structure 90 includes width adjusting portions 92 that reduce a distance W between the first side wall 46 and the second side wall 50 and limiting portions 94 that limit the range in which the distance W is reduced by the width adjusting portions 92.

Specifically, the width adjusting portions 92 are configured by bolts 100 that penetrate through holes 98 in bottom surfaces of counterbores 96 in the first side wall 46 and adjustment screw holes 102 formed in side end faces 54A, 58A of the front wall 54 and the rear wall 58 (see FIG. 6). Furthermore, the limiting portions 94 are configured by limiting screw holes 104 formed in the side end faces 54A, 58A of the front wall 54 and the rear wall 58 and set screws 106 (locking screws or set screws) screwed into the limiting screw holes 104.

The width adjusting portions 92 reduce the width W between the first side wall 46 and the second side wall 50 as threaded portions 100A of the bolts 100 are screwed into the adjustment screw holes 102. Furthermore, the limiting portions 94 adjust the amount that the set screws 106 are screwed into the limiting screw holes 104 to adjust the amount that the set screws 106 project from the side end faces 54A, 58A of the front wall 54 and the rear wall 58. Additionally, the set screws 106 projecting from the side end faces 54A, 58A of the front wall 54 and the rear wall 58 limit movement of the first side wall 46 in the direction toward the side end faces 54A, 58A of the front wall 54 and the rear wall 58 to thereby limit the range in which the distance W is reduced by the width adjusting portions 92.

Because of this, pressure is applied from the first side wall 46 and the second side wall 50 of the cover 40 to the contacts 64B, 66B of the first detection unit 64 and the second detection unit 66, and the contacts 64B, 66B of the first detection unit 64 and the second detection unit 66 are kept in a state in which they are retracted a predetermined amount. At this time, pressure in the projection directions acts on the first side wall 46 and the second side wall 50 of the cover 40 from the contacts 64B, 66B of the first detection unit 64 and the second detection unit 66, and this pressure becomes an application pressure. It will be noted in relation to the third detection unit 68 and the fourth detection unit 70 that application pressure may or may not be applied to them.

It will be noted that although in this embodiment a case using the detection units 64, 66 having the contacts 64B, 66B that retract when they are subjected to pressure is described, the detection units are not limited to this. For example, pressure-conductive rubber type or strain gauge type detection units that measure force from extension and contraction of an element when it is sandwiched between the cover 40 and the base portion 30 may also be used.

When using a pressure-conductive rubber type detection unit, it becomes possible to use, as the application pressure, the reaction force that occurs when the pressure-conductive rubber elastically deforms. Because of this, the pressure applying structure 90 independent of the cover 40 becomes unnecessary.

### (Contact Portion)

As shown in FIG. 4, the contact portion 42 is configured by a rubber material formed in a tabular shape, and the contact portion 42 mitigates impact and shock between the first finger 20 and the object 24 when the first finger 20 and the second finger 22 grip the object 24.

Recessed portions 108 are formed in the four corners of the contact portion 42, and through holes 110 that penetrate to the reverse face are formed in bottom surfaces 108A of the recessed portions 108. Screw holes 112 are formed in places in the front wall 46 corresponding to the through holes 110, and screws 114 inserted into the through holes 110 in the contact portion 42 are screwed into the screw holes 112, whereby the contact portion 42 can be replaceably attached to the cover 40.

### (Action and Effects)

Next, the action and effects of this embodiment will be described.

In the robot 10 of this embodiment, the first finger 20 of the robot hand 16 is provided with the tactile sensor 26. The tactile sensor 26 includes the cover 40 that is disposed so as to sandwich the base portion 30 and the detection units 64, 66 that are disposed between the base portion 30 and the cover 40 in a state in which they are pressed in the direction of the base portion 30 by the cover 40.

For this reason, even when some dimensional error arises in the base portion 30, the detection units 64, 66, and/or the cover 40, it becomes possible to stably ensure the state of contact between the cover 40 and the detection units 64, 66. Because of this, the processing cost of the cover 40 can be kept down.

Consequently, the cost of the tactile sensor 26 can be reduced compared to a case where the state of contact between the cover 40 and the detection units 64, 66 is ensured by enhancing dimensional accuracy.

Furthermore, the detection units 64, 66 can detect force applied to the cover from the relative displacement of the cover 40 with respect to the base portion 30.

Additionally, the detection unit includes the first detection unit 64 disposed between the one side face 44 and the first side wall 46 and the second detection unit 66 disposed between the other side face 48 and the second side wall 50. Because of this, force applied from the first side wall 46 side of the cover 40 and force applied from the second side wall 50 side can be detected by the detection units 64, 66.

Furthermore, the first detection unit 64 and the second detection unit 66 are disposed in such a way that the projection direction of the first contact 64B projecting from the first detection unit 64 and the projection direction of the second contact 66B projecting from the second detection unit 66 are in opposite directions on the same hypothetical line 88.

For this reason, compared to a case where the projection direction of the first contact 64B of the first detection unit 64 and the projection direction of the second contact 66B of the second detection unit 66 are not disposed on the same hypothetical line 88, inclination of the cover 40 can be inhibited without providing an inclination inhibiting structure.

Furthermore, the detection unit has the third detection unit 68 disposed between the front face 52 and the front wall 54 that configures a connecting wall. Because of this, it becomes possible to detect not only a force in the lateral direction X with respect to the base portion 30 but also a force from the front and rear direction Y.

Moreover, the tactile sensor 26 includes the pressure applying structure 90 that applies pressure to the detection unit from the cover 40, and the pressure applying structure 90 includes the width adjusting portions 92 that reduce the distance W between the first side wall 46 and the second side wall 50 and the limiting portions 94 that limit the range in which the distance W is reduced by the width adjusting portions 92. Because of this, it becomes easy to set the application pressure applied to the detection units 64, 66.

Furthermore, the recessed portions 72, 74, 76, 78, 80, 82, 84, 86 for positioning the detection units 64, 66, 68, 70 are provided in at least either one of the base portion 30 or the cover 40. Because of this, it becomes possible to inhibit positional misalignment of the cover 40 with respect to the detection units 64, 66, 68, 70.

Additionally, the contact portion 42 that contacts the target place is replaceably attached to the cover 40. For this reason, the contact portion 42 can be replaced with contact portions 42 suited to objects 24 to be gripped and the work to be performed by the robot hand 16.

Specifically, when gripping a slippery object 24, for example, a contact portion 42 having a high coefficient of friction can be attached, so that workability resulting from the robot 10 can be improved.

Furthermore, when the contact portion 42 deteriorates, just the contact portion 42 can be replaced. Because of this, the maintainability of the robot hand 16 is improved.

### <Second Embodiment>

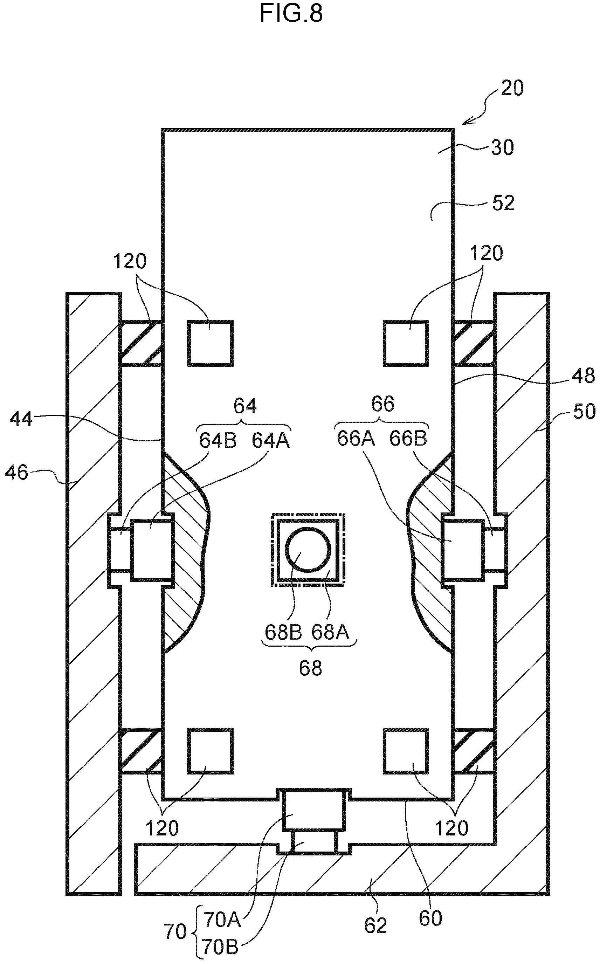

FIG. 8 is a drawing showing a second embodiment; parts identical or similar to those of the first embodiment are denoted by the same reference signs and description thereof is omitted, and only parts that are different will be described. This embodiment differs from the first embodiment in that plural buffer members 120 are disposed apart from each other between the base portion 30 and the cover 40.

That is, buffer members 120 are provided between the one side face 44 of the base portion 30 and the first side wall 46, and the buffer members 120 are disposed at the four corners of the first side wall 46. Furthermore, buffer members 120 are provided between the other side face 48 of the base portion 30 and the second side wall 50, and the buffer members 120 are disposed at the four corners of the second side wall 50. Additionally, buffer members 120 are provided between the front face 52 of the base portion 30 and the front wall 54 (not shown in the drawing), and the buffer members 120 are disposed at the four corners of the front wall 54. It will be noted that the limiting portions 94 of the pressure applying structure 90 of the first embodiment may or may not be provided.

Each of the buffer members 120 is formed in the shape of a cuboid, and each of the buffer members 120 is configured by elastic rubber as an example.

### (Action and Effects)

In this embodiment also, the same action and effects can be obtained in regard to parts identical or similar to those of the first embodiment.

Furthermore, in this embodiment, the plural buffer members 120 are disposed apart from each other between the base portion 30 and the cover 40, so wobbling and inclination of the cover 40 with respect to the base portion 30 can be inhibited. Furthermore, inclination of the cover 40 with respect to the base portion 30 can also be inhibited.

### <Third Embodiment>

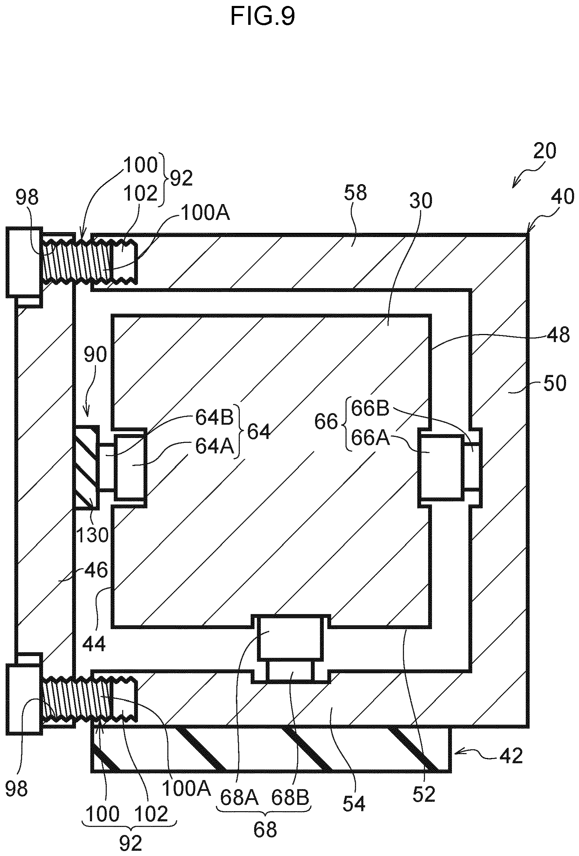

FIG. 9 is a drawing showing a third embodiment; parts identical or similar to those of the first embodiment and the second embodiment are denoted by the same reference signs and description thereof is omitted, and only parts that are different will be described. This embodiment differs from the first embodiment and the second embodiment in that the pressure applying structure 90 is configured as a result of an elastic member 130 being disposed between the cover 40 and the detection unit.

That is, the elastic member 130 is disposed between the first contact 64B of the first detection unit 64 and the first side wall 46 of the cover 40.

The elastic member 130 is configured by block-shaped rubber as an example, and the pressure applying structure 90 is configured utilizing the restoring force of an elastic body that is elastically deformed as a result of being pressed toward the base portion 30 by the cover 40.

It will be noted that although in this embodiment the elastic member 130 is provided on the first detection unit 64, the elastic member 130 is not limited to this and may also be provided on the second detection unit 66.

Furthermore, the elastic member 130 may also be provided between the sensor bodies 64A, 66A of the detection units 64, 66 and the base portion 30.

### (Action and Effects)

In this embodiment also, the same action and effects can be obtained in regard to parts identical or similar to those of the first embodiment.

Furthermore, in this embodiment, the pressure applying structure 90 can be configured utilizing the restoring force of the elastic member 130 that is elastically deformed, so the pressure applying structure 90 can be simplified.

### <Fourth Embodiment>

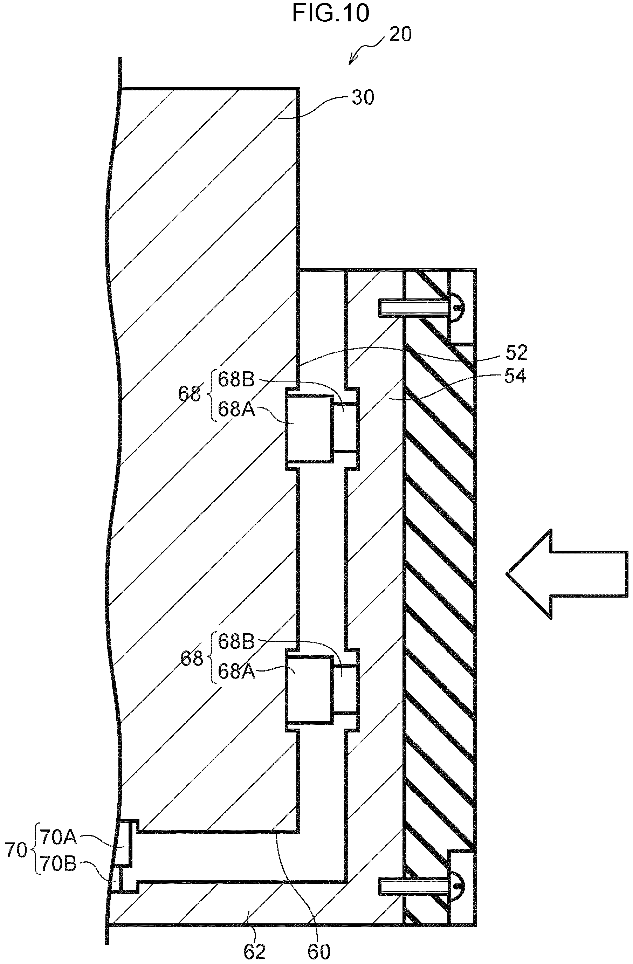

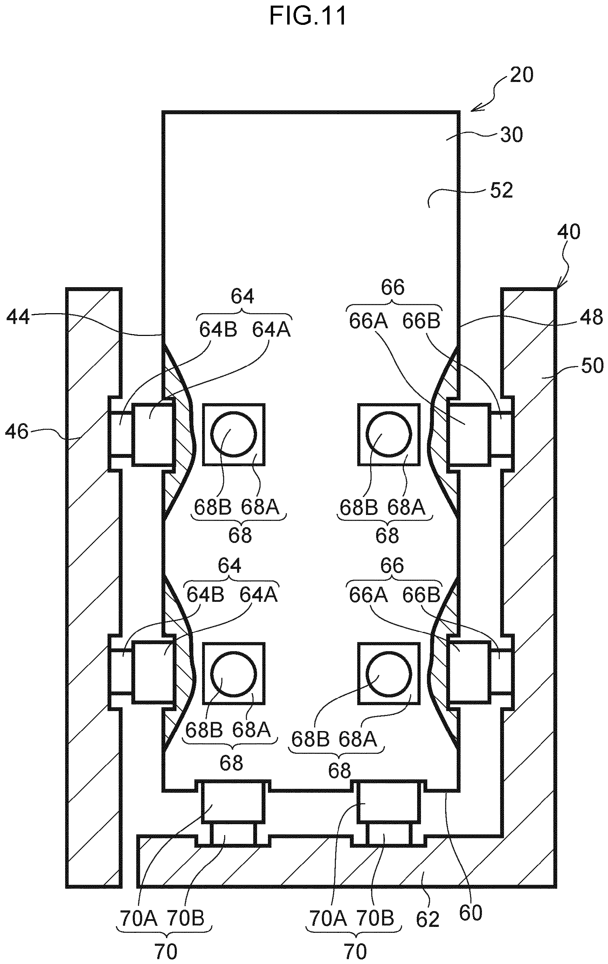

FIG. 10 and FIG. 11 are drawings showing a fourth embodiment; parts identical or similar to those of the first embodiment are denoted by the same reference signs and description thereof is omitted, and only parts that are different will be described.

That is, the first detection unit 64 is disposed in four places apart from each other between the one side face 44 of the base portion 30 and the first side wall 46. Furthermore, the second detection unit 66 is disposed in four places apart from each other between the other side face 48 of the base portion 30 and the second side wall 50.

Additionally, the third detection unit 68 is disposed in four places apart from each other between the front face 52 of the base portion 30 and the front wall 54. Furthermore, the fourth detection unit 70 is disposed in four places away from each other between the end face 60 of the base portion 30 and the distal end wall 62.

### (Action and Effects)

In this embodiment also, the same action and effects can be obtained in regard to parts identical or similar to those of the first embodiment.

Furthermore, in this embodiment, the plural detection units 64, 66, 68, 70 are disposed apart from each other between the faces 44, 48, 52, 64 of the base portion 30 and the walls 46, 50, 54, 62 of the cover 40, so wobbling of the cover 40 with respect to the base portion 30 can be inhibited. Furthermore, inclination of the cover 40 with respect to the base portion 30 can also be inhibited.

Additionally, the plural detection units 64, 66 can be stably brought into contact with the cover 40 by the pressure applying structure 90, so compared to a case where a gap is formed between any of the detection units 64, 66 and the cover 40, a deterioration in detection accuracy can be inhibited.

It will be noted that although in the embodiments a case was described where the tactile sensor 26 is provided on the first finger 20 of the robot hand 16, the tactile sensor 26 is not limited to this. For example, the tactile sensor 26 may also be provided on a wrist portion of the robot 10.

Furthermore, the first detection unit 64 and the second detection unit 66 do not invariably need to be disposed on the same hypothetical line 88. Moreover, the elastic member 130 configuring the pressure applying structure 90 may also be provided on the side faces 44, 48 on the opposite sides of the detection units 64, 66.

Below is a description of the reference signs.
- 10: Robot
- 12: Robot Body
- 16: Robot Hand
- 20: First Finger
- 22: Second Finger
- 24: Object
- 26: Tactile Sensor
- 30: Base Portion
- 40: Cover
- 42: Contact Portion
- 44: One Side Face
- 46: First Side Wall
- 48: Other Side Face
- 50: Second Side Wall
- 52: Front Face
- 54: Front Wall
- 60: End Face
- 62: Distal End Wall
- 64: First Detection Unit
- 64B: First Contact
- 66: Second Detection Unit
- 66B: Second Contact
- 72: Recessed Portions
- 74: Recessed Portions
- 76: Recessed Portions
- 78: Recessed Portions
- 80: Recessed Portions
- 82: Recessed Portions
- 84: Recessed Portions
- 86: Recessed Portions
- 88: Hypothetical Line
- 90: Pressure Applying Structure
- 92: Width Adjusting Portions
- 94: Limiting Portions
- 120: Buffer Members
- 130: Elastic Member

### «Additional Remarks»

From this specification the following aspects are conceptualized.

Aspect 1 is a tactile sensor including:
a cover that is disposed so as to sandwich a base portion and covers at least part of the base portion; and
a detection unit that is disposed between the base portion and the cover in a state in which it is pressed in a direction of the base portion by the cover, and detects force applied to the cover.

Aspect 2 is the tactile sensor of aspect 1,
wherein the detection unit detects force applied to the cover from relative displacement of the cover with respect to the base portion.

Aspect 3 is the tactile sensor of aspect 1 or aspect 2, wherein
the cover includes a first side wall disposed along one side face of the base portion, a second side wall disposed along another side face on an opposite side from the one side face, and a connecting portion that interconnects the first side wall and the second side wall, and
the detection unit includes a first detection unit disposed between the one side face and the first side wall and a second detection unit disposed between the other side face and the second side wall.

Aspect 4 is the tactile sensor of aspect 3, wherein
the first detection unit and the second detection unit are disposed in a state in which a projection direction of a first contact projecting from the first detection unit and a projection direction of a second contact projecting from the second detection unit are opposite directions on a same line.

Aspect 5 is the tactile sensor of aspect 3 or aspect 4, wherein
the connecting portion configures a connecting wall disposed along a front face of the base portion, and
the detection unit further includes a third detection unit disposed between the front face and the connecting wall.

Aspect 6 is the tactile sensor of any of aspect 3 to aspect 5, further including a pressure applying structure that applies pressure to the detection unit from the cover.

Aspect 7 is the tactile sensor of aspect 6,
wherein the pressure applying structure includes a width adjusting portion that reduces the distance between the first side wall and the second side wall and a limiting portion that limits the range in which the distance is reduced by the width adjusting portion.

Aspect 8 is the tactile sensor of aspect 6, wherein the pressure applying structure is configured as a result of an elastic member being disposed at least either one of between the cover and the detection unit or between the detection unit and the base portion.

Aspect 9 is the tactile sensor of any of aspect 1 to aspect 8, wherein a recessed portion for positioning the detection unit is provided at at least either one of the base portion or the cover.

Aspect 10 is the tactile sensor of any of aspect 1 to aspect 9, wherein plural buffer members are disposed apart from each other between the base portion and the cover.

Aspect 11 is the tactile sensor of any of aspect 1 to aspect 10, wherein a contact portion that contacts a target place is replaceably attached to the cover.

Aspect 12 is a robot hand including:
the tactile sensor of any of aspect 1 to aspect 11; and
an opposing member that is disposed opposing the tactile sensor and grips an object between itself and the tactile sensor.

Aspect 13 is a robot including:
the robot hand of aspect 12; and
a robot body that drives the robot hand.

All publications, patent applications, and technical standards mentioned in this specification are incorporated by reference herein to the same extent as if each individual publication, patent application, or technical standard were specifically and individually indicated to be incorporated by reference.

## Claims

1. A tactile sensor comprising:
a cover that is disposed so as to sandwich a base portion and covers at least part of the base portion; and
a detection unit that is disposed between the base portion and the cover in a state in which it is pressed in a direction of the base portion by the cover, and detects force applied to the cover.

2. The tactile sensor of claim 1, wherein the detection unit detects force applied to the cover from relative displacement of the cover with respect to the base portion.

3. The tactile sensor of claim 1 or claim 2, wherein:
the cover includes a first side wall disposed along one side face of the base portion, a second side wall disposed along another side face on an opposite side from the one side face, and a connecting portion that interconnects the first side wall and the second side wall, and
the detection unit includes a first detection unit disposed between the one side face and the first side wall and a second detection unit disposed between the other side face and the second side wall.

4. The tactile sensor of claim 3, wherein the first detection unit and the second detection unit are disposed in a state in which a projection direction of a first contact projecting from the first detection unit and a projection direction of a second contact projecting from the second detection unit are opposite directions on a same line.

5. The tactile sensor of claim 3 or claim 4, wherein:
the connecting portion configures a connecting wall disposed along a front face of the base portion, and
the detection unit further includes a third detection unit disposed between the front face and the connecting wall.

6. The tactile sensor of any one of claim 3 to claim 5, further comprising a pressure applying structure that applies pressure to the detection unit from the cover.

7. The tactile sensor of claim 6, wherein the pressure applying structure includes a width adjusting portion that reduces a distance between the first side wall and the second side wall and a limiting portion that limits a range in which the distance is reduced by the width adjusting portion.

8. The tactile sensor of claim 6, wherein the pressure applying structure is configured as a result of an elastic member being disposed at least either one of between the cover and the detection unit or between the detection unit and the base portion.

9. The tactile sensor of any one of claim 1 to claim 8, wherein a recessed portion for positioning the detection unit is provided at at least either one of the base portion or the cover.

10. The tactile sensor of any one of claim 1 to claim 9, wherein plural buffer members are disposed apart from each other between the base portion and the cover.

11. The tactile sensor of any one of claim 1 to claim 10, wherein a contact portion that contacts a target place is replaceably attached to the cover.

12. A robot hand comprising:
the tactile sensor of any one of claim 1 to claim 11; and
an opposing member that is disposed opposing the tactile sensor and grips an object between itself and the tactile sensor.

13. A robot comprising:
the robot hand of claim 12; and
a robot body that drives the robot hand.
